(19) Europäisches Patentamt
European Patent Office
Office européen des brevets

(11) **EP 3 632 247 A1**

(12) **EUROPEAN PATENT APPLICATION**
published in accordance with Art. 153(4) EPC

(43) Date of publication:
**08.04.2020 Bulletin 2020/15**

(51) Int Cl.:
***A41D 13/11*** *(2006.01)* ***A62B 18/02*** *(2006.01)*

(21) Application number: **18809944.4**

(22) Date of filing: **24.05.2018**

(86) International application number:
**PCT/JP2018/020040**

(87) International publication number:
**WO 2018/221381 (06.12.2018 Gazette 2018/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.06.2017 JP 2017109843**

(71) Applicant: **Kuraray Kuraflex Co., Ltd.**
**Okayama-shi, Okayama 702-8045 (JP)**

(72) Inventors:
• **NAKAYAMA, Kazuhisa**
**Okayama-shi**
**Okayama 702-8045 (JP)**

• **KANBARA, Kazuhiro**
**Osaka-shi**
**Osaka 530-8611 (JP)**
• **IWAMOTO, Takuya**
**Tokyo 100-8115 (JP)**
• **OCHIAI, Toru**
**Okayama-shi**
**Okayama 702-8045 (JP)**

(74) Representative: **Vossius & Partner**
**Patentanwälte Rechtsanwälte mbB**
**Siebertstrasse 3**
**81675 München (DE)**

(54) **MASK**

(57) Provided is a mask (100) including at least a mouth- and/or nose-covering part for a human. The mask (100) includes at least a mouth- and/or nose-covering part (110) for a human, wherein the covering part (110) at least includes a breathing-sided sheet (121) containing hydrophilic fibers as a human-sided ply, and the breathing-sided sheet (121) is a nonwoven fabric having a mesh form of linear portions. For example, the linear portions of the breathing-sided sheet may have an average line width in a range from about 0.1 to 3.0 mm. The hydrophilic fibers may be cellulose fibers.

Fig. 1

EP 3 632 247 A1

**Description**

CROSS REFERENCE TO THE RELATED APPLICATION

This application claims priority to Japanese patent application No. 2017-109843, filed June 2, 2017, the entire disclosure of which is incorporated by reference into this application.

FIELD OF THE INVENTION

The present invention relates to a mask configured to cover at least the mouth and/or the nose of a human. Specifically, the present invention relates to a mask capable of absorbing and dispersing breathing vapor and droplets from breath so as to prevent the mask from being wet or sticky as well as capable of providing freshness (cool and dry feeling) to a wearer.

BACKGROUND OF THE INVENTION

Masks are often used to prevent exposure to particles, such as pollens and dusts, as well as pathogens. For example, Patent Document 1 (JP Laid-open Patent Publication No. 2004-357871) discloses a face mask comprising a main body having a sufficient size to cover the nose and the mouth of a human and a retaining member for retaining the main body at a predetermined position on the face.
There has been a problem that conventional masks cause discomfort such as stickiness and stuffiness inside the masks when worn for a long time. As a solution for the problem, Patent Document 2 (JP Laid-open Patent Publication No. 2006-325688) discloses a mask comprising a mask body and a fixing means configured to fix the mask body on a desired position on a face, wherein the mask body comprises a hydrophobic fabric at least on the side that contacts the face.

CONVENTIONAL ART DOCUMENT

PATENT DOCUMENT

[Patent Document 1] JP Laid-open Patent Publication No. 2004-357871

[Patent Document 2] JP Laid-open Patent Publication No. 2006-325688

SUMMARY OF THE INVENTION

PROBLEMS TO BE SOLVED BY THE INVENTION

In Patent Document 1, however, since a gauze is folded to form multiple plies, the folded gauze tends to accumulate heat because of its thickness. Thus, when a mask is worn for a long time, humid air exhaled from the mouth and nose causes excessively high humidity inside the mask. As a result, the surface of the mask which is in contact with the face becomes wet and sticky, causing discomfort in wearing. In Patent Document 2, since a mask comprises a hydrophobic fabric on the side that comes into contact with the face, the mask not only has insufficient water absorbency, but also has a problem of condensation of moisture from breath on the surface of the hydrophobic fabric.
Therefore, an object of the present invention is to provide a mask capable of effectively absorbing breathing vapor and droplets from breath so as to prevent the mask from being wet or sticky on a contact part in contact with a wearer as well as capable of maintaining comfortableness when worn for a long time.

MEANS FOR SOLVING THE PROBLEMS

The inventors of the present invention have made extensive efforts to achieve the object and found that where a nonwoven fabric having a mesh form and including hydrophilic fibers is used as a breathing-sided sheet, i.e., as a human-sided ply (layer) provided in at least a mouth- and/or nose-covering part for a human, it is possible (i) not only to absorb breathing vapor and droplets originating from breath at a high absorption rate, but also to quickly disperse the moisture in a planer direction of a sheet, (ii) to achieve excellent absorbance and dispersibility of breathing vapor and droplets so that such a mask prevents condensation of breathing, resulting in avoidance of wetting and stickiness inside the mask, and further (iii) to provide freshness to a wearer of the mask due to removal of heat of vaporization caused by enhancement of evaporation rate of the moisture absorbed in the breathing-sided sheet. The inventors thus achieved the present invention.

That is, the present invention may include the following aspects.

Aspect 1

A mask comprising at least a mouth- and/or nose-covering part for a human, wherein the covering part at least comprises a breathing-sided sheet (a sheet provided on the side of a breathing wearer) containing hydrophilic fibers as a human-sided ply, and the breathing-sided sheet is a nonwoven fabric having a mesh form of linear portions.

Aspect 2

The mask according to aspect 1, wherein the linear portions of the breathing-sided sheet have an average line width in a range from 0.1 to 3.0 mm (preferably from 0.2 to 2.5 mm, more preferably from 0.3 to 2.0 mm, and even more preferably from 0.5 to 2.0 mm).

Aspect 3

The mask according to aspect 1 or 2, wherein the hydrophilic fibers are cellulose fibers (preferably rayon fibers).

Aspect 4

The mask according to any one of aspects 1 to 3, wherein the breathing-sided sheet contains the hydrophilic fibers at a content of 50 wt% or higher (preferably 60 wt% or higher, and more preferably 70 wt% or higher) and further contains heat-bondable fibers.

Aspect 5

The mask according to any one of aspects 1 to 4, wherein the breathing-sided sheet has a thickness in a range from 0.25 to 1.00 mm (preferably from 0.30 to 0.80 mm, and more preferably from 0.35 to 0.60 mm).

Aspect 6

The mask according to any one of aspects 1 to 5, wherein the breathing-sided sheet has a value obtained by multiplying the average line width (mm) by the thickness (mm) in a range from 0.025 to 1.8 (preferably from 0.1 to 1.5, more preferably from 0.2 to 1.0, and even more preferably from 0.2 to 1.0).

Aspect 7

The mask according to any one of aspects 1 to 6, wherein the breathing-sided sheet has a basis weight in a range from 30 to 100 $g/m^2$ (preferably from 32 to 90 $g/m^2$, and more preferably from 35 to 80 $g/m^2$).

Aspect 8

The mask according to any one of aspects 1 to 7, wherein the covering part further comprises a filter sheet on an outer side of the breathing-sided sheet.

Aspect 9

The mask according to aspect 8, wherein the filter sheet is an electrified melt-blown nonwoven fabric.

Aspect 10

The mask according to aspect 8, wherein the filter sheet is a triboelectrically charged needle-punched nonwoven fabric.

The present invention encompasses any combination of at least two features disclosed in the claims and/or the specification and/or the drawings. In particular, any combination of two or more of the appended claims should be equally construed as included within the scope of the present invention.

EFFECT OF THE INVENTION

According to the present invention, since a mask comprises a breathing-sided sheet containing hydrophilic fibers as a human-sided ply in a mouth- and/or nose-covering part for a human, and the breathing-sided sheet is a nonwoven fabric having a mesh form, such a mask makes it possible to quickly disperse and dry breathing vapor and droplets from breath of a wearer so as not only to prevent wetting or stickiness of the mask, but also to prevent the mask from causing condensation. Furthermore, the mask makes it possible to provide freshness to the wearer so that the wearer can comfortably wear the mask even when the mask is worn for a long time.

Moreover, the mask according to the present invention is not only capable of absorbing moisture originating from sweat excreted on the face that is in contact with the mask so as to relieve discomfort such as stickiness and clinging caused by sweat, but also capable of providing freshness by making use of heat of vaporization in moisture dispersion and drying.

Additionally, the mask according to the present invention is capable of inhibiting bacteria from propagating inside the mask due to sweat and/or saliva so as to suppress smell caused by propagation of bacteria, thanks to its high drying capability.

In particular, since the mask according to the present invention can provide freshness to a wearer, the mask is capable of reducing discomfort to the wearer in summer. Therefore, such a mask is applicable as a summer mask (a mask suitable for being worn in summer).

BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views. In the figures,

Fig. 1 is a schematic plan view of a mask according to a first embodiment of the present invention;
Fig. 2 is a schematic cross-sectional view showing an example of a layered sheet used in the first embodiment of the present invention;
Fig. 3 is an enlarged image for illustrating arrangement of fibers in a nonwoven fabric having a mesh form of a breathing-sided sheet used in the first embodiment of the present invention;
Fig. 4 is an enlarged schematic plan view for illustrating the nonwoven fabric having a mesh form shown in Fig. 3;
Fig. 5 is a schematic plan view showing a mask according to a second embodiment of the present invention; and
Fig. 6 is a schematic development view of the mask shown in Fig. 5.

DESCRIPTION OF THE EMBODIMENTS

In the present invention, a mask refers to a covering configured to cover at least one or both of the mouth and the nose (in particular, the nostril part) of a human, regardless of the presence or absence of a fixing part, such as bands for fixing the mask to the face. The mask may further cover other parts of the human besides the mouth and nose.

Hereinafter, the embodiments of the present invention will be explained with reference to the drawings. It should be noted that the present invention is not limited to the illustrated embodiments.

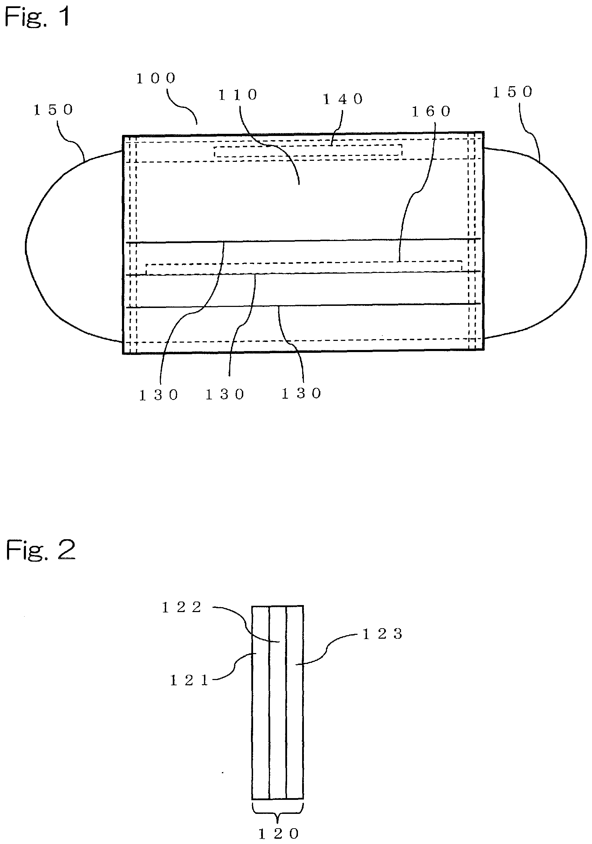

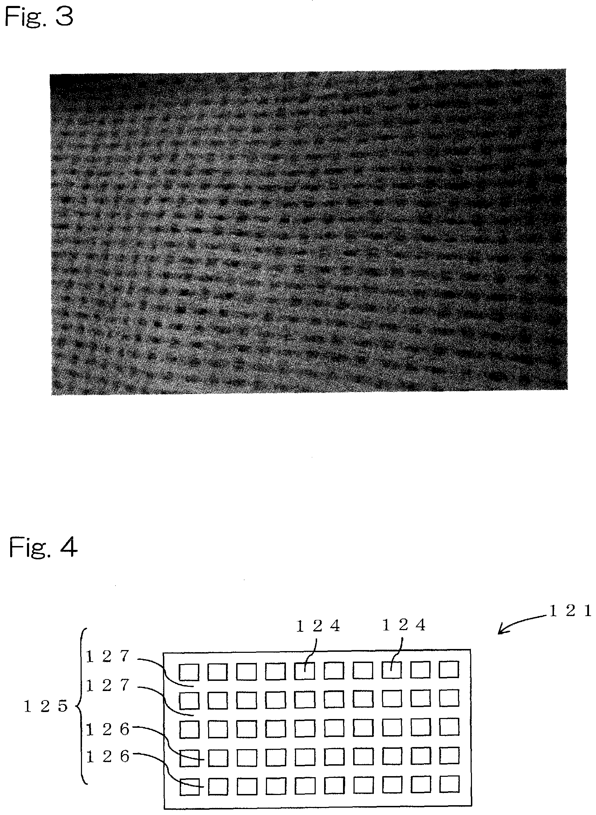

Fig. 1 is a schematic plan view of a mask according to a first embodiment of the present invention. Fig. 2 is a schematic cross-sectional view showing an example of a layered sheet used in a mask according to the first embodiment. Fig. 3 is an enlarged image for explaining arrangement of fibers in a nonwoven fabric having a mesh form of a breathing-sided sheet used in the first embodiment. Fig. 4 is an enlarged schematic plan view for explaining the nonwoven fabric having a mesh form shown in Fig. 3

As shown in Fig. 1, the pleated mask 100 according to a first embodiment of the present invention includes: a covering part 110 having a transversely long shape and a sufficient size to cover the nose and the mouth; and fixing parts 150 provided at opposite ends of the covering part in a transverse direction of the mask. The covering part 110 may have at least one pleat 130 formed by a fold that extends in the transverse direction. The pleat 130 makes it possible to stretch the covering part 110 in a vertical direction so as to adapt the covering part 110 to different face sizes. The fixing parts 150 may be formed of, for example, a stretchable material in a string shape and attached to opposite ends of the covering part 110 by ultrasonic sealing or the like.

Additionally, the covering part 110 may be provided therein with a wire 140, for example, along an upper side of the covering part. The wire 140 can be suitably deformed so as to improve fittability between the covering part of the mask and a part of a human to which the mask is fitted.

The covering part 110 may also be provided therein with an elastic reinforcing part 160 in parallel with the pleat, for example, at a substantially central portion of the covering part. The elastic reinforcing part may be an elastic member having an elongate shape, for example, with a width from 1 to 6 mm and a length from 70 to 155 mm. Such an elastic member may be formed of, for example, various resins (thermoplastic resin, thermosetting resin). Examples of such resins may preferably include polyester resins, such as polyethylene terephthalate (PET) and polybutylene terephthalate (PBT); polyolefin resins, such as polyethylene, polypropylene and polybutylene; polyamide resins; polycarbonate (PC) resins; polystyrene resins; thermoplastic elastomers, such as styrene-(ethylene/propylene) block copolymer (SEP), styrene-(ethylene/propylene)-styrene block copolymer (SEPS), styrene-(ethylene/butylene)-styrene block copolymer (SEBS) and styrene-(ethylene-ethylene/propylene)-styrene block copolymer (SEEPS); polyurethane resins; epoxy resins; or any suitable mixture of these resins. Provision of the elastic reinforcing part 160 allows the covering part of the mask to have a radial shape toward the outside. Thus, breathing vapor can radially spread so that the breathing vapor can be uniformly absorbed to the mask covering part. In addition, this makes it possible to enlarge the hollow space around the mouth so as to improve comfortability to a mask wearer.

The covering part 110 includes a layered sheet 120. The layered sheet 120 is formed of a plurality of sheet plies. For example, as shown in Fig. 2, the layered sheet 120 preferably includes a breathing-sided sheet 121 configured to cover the mouth and nose, a filter sheet 122 that forms an intermediate ply, and a surface (outermost surface) sheet 123 that forms an outer ply on the opposite side from the breathing side. Each of the plies may include two or more sheets in the ply.

As shown in Fig. 3, the breathing-sided sheet is made of a nonwoven fabric having a mesh form. It should be noted that in Fig. 3, the vertical direction corresponds to an up-and-down direction of a human face, and the transverse direction corresponds to a left-and-right direction of the human face. The nonwoven fabric having a mesh form is configured as a three-dimensional mesh structure of linear portions made of discontinuous fibers, and alternately includes thin portions (where the fibers are sparse) and thick portions (where the fibers are dense) at predetermined intervals. In this regard, the linear portions refer to fiber aggregates formed by the continuous thick portions, in which fibers are aligned substantially uniformly.

Fig. 3 shows vertical linear portions in which the thick portions are aligned in the vertical direction as well as transverse linear portions in which the thick portions are aligned in the transverse direction. The vertical linear portions and transverse linear portions are crossed with each other so as to form the nonwoven fabric having a mesh form. The nonwoven fabric having a mesh form also has gaps between the vertical linear portions as well as between the transverse linear portions. Accordingly, the thin portions are formed at the areas where the gaps between the vertical linear portions and the gaps between the transverse linear portions are overlapped.

Unlike woven fabrics, the nonwoven fabric having a mesh form includes discontinuous fibers having a predetermined length that are gently oriented towards the vertical direction or the transverse direction. The fibers in the vertical linear portions as well as in the transverse linear portions may have a similar or different degree of orientation. For example, as shown in Fig. 3, the fibers of the nonwoven fabric having a mesh form are more uniformly oriented in the transverse linear portions than in the vertical linear portions.

Fig. 4 conceptually explains the nonwoven fabric having a mesh form shown in Fig. 3. In Fig. 4, the vertical direction corresponds to the up-and-down direction of a human face, and the transverse direction corresponds to the left-and-right direction of the human face. In Fig. 4, the breathing-sided sheet 121 is a fiber aggregate having a mesh form, and includes thin portions 124, as well as thick portions 125 comprising vertical linear portions 126 and transverse linear portions 127. In this figure, the vertical linear portions 126 are aligned in the up-and-down direction of the human face, and the transverse linear portions are aligned in the left-and-right direction of the human face.

In the present invention, the breathing-sided sheet may presumably have the following mechanism. In breath exhaled from a human, water vapor is present at a relative humidity of 100% at about 32°C around the mouth due to human body temperature. When the water vapor moves from the mouth and comes into contact with air at ambient temperature through the mask, a part of the water vapor condenses into water droplets in accordance with the ambient temperature (for example, 25°C) because the part of the water vapor that exceeds the relative humidity of 100% can no longer exist as vapor.

For example, when the breathing vapor and droplets contact the thin portions each having a higher air permeability, a part of the breathing vapor and droplets directly passes through the mask, whereas other part of the breathing vapor and droplets enters into the breathing-sided sheet of the mask and proceeds inside. Discontinuous fibers in nonwoven fabrics allow quicker absorption of breathing vapor and droplets. Then, the breathing vapor and droplets that have entered into the thick portions can be quickly dispersed throughout the sheet along the direction of the fibers in the thick portions. The breathing vapor and droplets that have entered into the thin portions can further move to the adjacent thick portions and then be quickly dispersed along the direction of the fibers in the thick portions.

As the breathing vapor and droplets are dispersed, they are moved toward the outside having a lower steam pressure and discharged again. When the re-discharged droplets are vaporized, heat of vaporization from the droplets makes it possible to actively discharge heat accumulated inside the mask to the outside.

As described above, since the breathing-sided sheet 121 is excellent in water absorbency, dispersibility and quick-drying property, the breathing-sided sheet makes it possible not only to suppress the occurrence of condensation inside the mask so as to prevent wetting and stickiness around the mouth and nose, but also to provide freshness to a wearer of the mask thanks to the heat of vaporization taken away as moisture from breath is absorbed and subsequently evaporated, so that the wearer can comfortably wear the mask even when the mask is worn for a long time. Where the fibers in the transverse linear portions (the left-and-right direction of the human face) are oriented at a higher degree of orientation than the fibers in the vertical linear portions (the up-and-down direction of the human face), the breathing vapor and droplets would be more likely to be dispersed in the transverse direction (the left-and-right direction of the human face), than in the vertical direction (the up-and-down direction of the human face) of the sheet. Further, where the human face is in direct contact with the nonwoven fabric having a mesh form, since only uneven parts in the mesh form contact the human face, the contact area between the human face and the nonwoven fabric having a mesh form can be reduced. As a result, heat release property of the mask can be enhanced so as to relieve discomfort while the mask is worn.

As the nonwoven fabric having a mesh form used for the breathing-sided sheet 121, there may be mentioned nonwoven fabrics formed of a combination of linear portions arranged vertically, transversely, and/or slantly (for example, rectilinear portions and curved portions), and such nonwoven fabrics have thin portions (or openings) and thick portions according to overlapping of the linear portions. Preferably, the linear portions include fibers arranged in a gently oriented manner along the longitudinal direction of the linear portions. The expression "gently oriented" used herein may mean, for example, a state in which more than half of the discontinuous fibers are oriented within a range of, for example, approximately $\pm 30°$ with respect to the longitudinal direction of the linear portions.

Preferably, the nonwoven fabric having a mesh form may have thin portions each having a substantially polygonal shape formed by a combination of rectilinear portions. The thin portions each having a substantially polygonal shape may include thin portions each having a substantially triangle shape, a substantially rectangle shape, or a substantially pentagonal shape. Preferably, the breathing-sided sheet may have thin portions each having a substantially rectangle shape to form a latticed pattern, as shown in Fig. 4.

The linear portions in the breathing-sided sheet may have any width selected in accordance with a shape. In order to achieve both water absorbency and dispersibility as well as air permeability, the linear portions in the respective directions may have an average line width in a range preferably from 0.1 to 3.0 mm, more preferably from 0.2 to 2.5 mm, even more preferably from 0.3 to 2.0 mm, and even more preferably 0.5 to 2.0 mm. In the present invention, the line width of the linear portions refers to a width of a linear portion formed of fibers excluding the thin portions, and refers to, for example, each of the widths of the vertical linear portions 126 and transverse linear portions 127 as shown in Fig. 4. The line width is preferably measured for each direction of the linear portions, and the line width of the linear portions may be an average of the widths in all directions. It should be noted that the line width of the linear portions may be a value determined in accordance with the method explained for the Examples described later. Preferably, the linear portions have, for example, a substantially equal line width in the respective directions (for example, the vertical direction and transverse direction).

In order to achieve water absorbency and dispersibility, air permeability, as well as moisture releasability to the outside, the breathing-sided sheet may have a thickness, for example, in a range from 0.25 to 1.00 mm, preferably from 0.30 to 0.80 mm, and more preferably from 0.35 to 0.60 mm. The thickness of the breathing-sided sheet is associated with the thickness of the linear portions of the nonwoven fabric having a mesh form. A larger thickness leads to better water absorbency, whereas it reduces the air permeability and moisture releasability. It should be noted that the thickness is a value determined in accordance with the method explained for the Examples described later.

Since the breathing-sided sheet has better water absorbency where the breathing-sided sheet has a larger average line width and a larger thickness, the breathing-sided sheet may have, for example, a product of an average line width (mm) and a thickness (mm), i.e., average line width x thickness (mm·mm), in a range from 0.025 to 1.8, preferably from 0.1 to 1.5, more preferably from 0.15 to 1.2, and even more preferably from 0.2 to 1.0. Preferably, the value of average line width x thickness (mm·mm) satisfies the above range for all the average line widths of the linear portions in the respective directions.

In order to achieve water absorbency and dispersibility, air permeability, as well as moisture releasability to the outside, the breathing-sided sheet may have a basis weight, for example, in a range from 30 to 100 $g/m^2$, preferably from 32 to 90 $g/m^2$, and more preferably from 35 to 80 $g/m^2$. The basis weight is a value determined in accordance with the method explained for the Examples described later.

In order to ensure ease of breathing, the breathing-sided sheet may have an air permeability, for example, in a range from 150 to 300 $cm^3/cm^2/s$, preferably from 160 to 280 $cm^3/cm^2/s$, and more preferably from 170 to 250 $cm^3/cm^2/s$. The air permeability is a value determined in accordance with the method explained for the Examples described later.

The breathing-sided sheet preferably has higher water absorption rate. In order for the mask of the present invention to provide freshness, the water absorption rate may be within 5.0 seconds, preferably within 3.0 seconds, and more preferably within 1.0 second. The water absorption rate is a value determined in accordance with the method explained for the Examples described later.

The breathing-sided sheet has such a water dispersibility after the water absorption (5 seconds after dropping a water drop) that the breathing-sided sheet is capable of quickly disperse water so as to enhance evaporation of the moisture therein. For example, a dispersibility of the mask may be expressed as an area represented by a product of a transverse dispersion length (mm) and a vertical dispersion length (mm), and the area may preferably be 400 mm$^2$ or higher, more preferably 430 mm$^2$ or higher, and even more preferably 450 mm$^2$ or higher. The dispersibility does not specifically have an upper limit, but may be, for example, about 900 mm$^2$. The dispersibility is a value determined in accordance with the method explained for the Examples described later.

It should be noted that where the directions of dispersion are anisotropic, the moisturized region of the mask can be more easily controlled. For example, as for the dispersion lengths in the transverse direction and vertical direction of the mask, a ratio of longer length/shorter length of the dispersion lengths may be in a range from 1.1 to 2.0, and preferably from about 1.2 to 1.5. Where the dispersibility has anisotropy, the shorter length of the dispersion lengths may be arranged in the vertical direction of the mask, and the longer length of the dispersion lengths may be arranged in the transverse direction, so that upward movement of the moisture can be suppressed so as to, for example, more effectively prevent glasses from fogging up.

In order to release heat by taking heat of vaporization away, the breathing-sided sheet may have higher water evaporation ratio after the water absorption, and the water evaporation ratio may be, for example, 51% or higher, preferably 55% or higher, and more preferably 60% or higher. Although the evaporation ratio has an upper limit of 100%, the upper limit may be, for example, about 90%. The evaporation ratio is a value determined in accordance with the method explained for the Examples described later.

The breathing-sided sheet may have any water retainability selected depending on the water absorption rate and evaporation ratio of the breathing-sided sheet. The breathing-sided sheet may have a water retention amount per 100 cm$^2$ of the breathing-sided sheet, for example, in a range from about 1.6 to 7.2 g, preferably from about 2.4 to 6.4 g, and more preferably from about 3.2 to 5.6 g. The breathing-sided sheet may have a water retention ratio (percentage based on the weight of 100 cm$^2$ of the breathing-sided sheet), for example, in a range from about 500 to 1400%, preferably about 600 to 1200%, and more preferably about 700 to 1000%.

The manufacturing of the mask 100 is not particularly limited, but is preferably carried out through continuous production processes in terms of productivity and manufacturing cost. For example, the breathing-sided sheet 121, the filter sheet 122, and the surface sheet 123 may be unwound from each of rolls so as to be overlaid in this order, and then continuously subjected to pleat-processing using folded plates, ultrasonic sealing or heat sealing of the vertical and transverse end portions, and/or ultrasonic sealing or heat sealing for attaching the fixing part 150 to produce the mask 100.

In the manufacturing of the mask 100, the nonwoven fabric having a mesh form and forming the breathing-sided sheet 121 is preferably produced in such a way that the transverse direction of the mask corresponds to a machine direction (MD direction) of the nonwoven fabric. By matching the transverse direction of the mask with the MD direction of the nonwoven fabric, it is possible to produce a mask having excellent dispersion anisotropy and pleat-processability. It should be noted that in the present invention, the MD direction refers to a direction to which the nonwoven fabric is conveyed during the production, and the MD direction can be determined on the basis of the direction of fiber orientation.

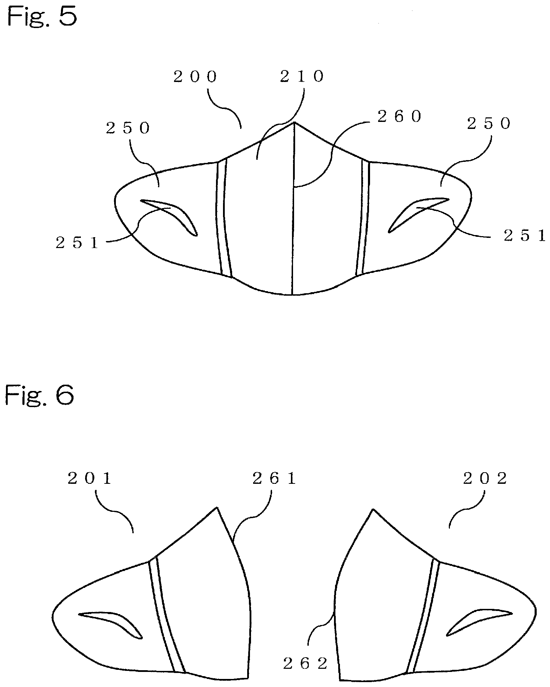

Fig. 5 shows a mask according to a second embodiment of the present invention, and Fig. 6 is a development view of the mask according to the second embodiment.

As shown in Fig. 5, the three-dimensional mask 200 according to the second embodiment of the present invention is a three-dimensional mask configured to be worn so as to cover the mouth and the nose, and comprises a covering part 210 and fixing parts 250 formed of, e.g., a stretchable nonwoven fabric that is different from the covering part 210. The mask 200 can be formed by bringing connecting parts 261, 262 into contact at ends of a pair of mask pieces 201, 202 as shown in Fig. 6 together by heat sealing to form a connection part 260 as shown in Fig. 5. Each of the pair of mask pieces 201, 202 as shown in Fig. 6 is obtained by connecting the covering part 210 and the fixing part 250 together and then cutting the resulting piece into the shape as shown in Fig. 6. In Fig. 5, the reference numeral 251 denotes a cut (an opening through which an ear is inserted) provided to form the fixing part 250.

The covering part 210 may comprise a similar layered sheet to the layered sheet 120 used in the first embodiment. That is, the covering part 210 may comprise a surface sheet 123 as an outermost ply, a filter sheet 122 as an intermediate ply, and a breathing-sided sheet 121 as an innermost ply. The mask according to the second embodiment also makes it possible to quickly absorb moisture from breath thanks to the nonwoven fabric having a mesh form as the breathing-sided sheet, and to disperse and subsequently evaporate the moisture inside the breathing-sided sheet so as to provide freshness by taking the heat of vaporization away.

The mask of the present invention may be formed in various embodiments, besides the two embodiments described above, as long as it is a mask configured to cover at least the mouth and/or nose of a human. Also, as long as the mask has the breathing-sided sheet at least in the covering part, it is possible to suitably use other components in combination with the breathing-sided sheet to form a mask configured to cover at least the mouth and/or the nose of a human.

For example, in one variant, the mask of the present invention may be a therapeutic mask (for example, a nose mask or a full-face mask) for sleep apnea syndrome, which is used in CPAP treatment suitable for treating sleep apnea syndrome or in NIPPV treatment suitable for treating ventilation failure.

A therapeutic mask for sleep apnea syndrome comprises, for example, a mask body, a fixing means configured to fix the mask body to a wearer, and a tube attachable opening configured to attach a tube for introducing a humidified air flow into the mask body (for example, a plastic component). In the mask of the present invention, a breathing-sided sheet is removably attached as a human-sided ply to the inner surface of the mask body by means of hook-and-loop fasteners. In this case, the breathing-sided sheet has an opening adapted to the tube attachable opening.

Use of the breathing-sided sheet fixed to the inner surface of the mask body makes it possible to absorb moisture generated during the use of a nose mask by the breathing-sided sheet, so as to relieve discomfort while the mask is worn. Preferably, a thin breathing-sided sheet may extend out of the mask. Even if the mask is in contact with a covered part of a wearer via the breathing-sided sheet, the thin breathing-sided sheet can maintain airtightness between the mask and the wearer and can release moisture to the outside from the part of the breathing-sided sheet that extends out of the mask.

Breathing-Sided Sheet

A nonwoven fabric having a mesh form used for the breathing-sided sheet is a dry nonwoven fabric in order to ensure handling property (for example, breakage resistance while the mask is worn), water absorbency and flexibility. For example, the nonwoven fabric can be obtained by the following method. The dry nonwoven fabric may include constituent fibers having a fiber length, for example, in a range from about 20 to 70 mm, preferably from about 25 to 65 mm, more preferably from about 30 to 60 mm, and even more preferably from about 35 to 55 mm. Thus, it is possible to distinguish from a wet nonwoven fabric (typically, having a fiber length of 10 mm or shorter) in which entanglement of fibers is disadvantageous in production.

Predetermined fiber aggregates are subjected to carding or an air-laid process to obtain a web. The fiber aggregates at least include hydrophilic fibers and may include other fibers (such as heat-bondable fibers and functional fibers) depending on needs. The web may be shaped in a random web, a semi-random web, or a parallel web. Of these shapes, a semi-random web is preferred in order to achieve good fiber orientation in the linear portions forming the mesh.

Next, the obtained web is processed to bond the fibers so as to impart practical strength. The bonding may be performed chemically (for example, chemical bonding), thermally (for example, thermal bonding), or mechanically (for example, hydroentanglement, needle punching). In order to form a mesh shape, it is preferable to use hydroentanglement in which the fibers are entangled through a hydroentanglement process.

In hydroentanglement, high-pressure water jets (curtains) are injected from a nozzle having fine holes onto a porous support on which a web is placed, and water jets that have passed through the web hit and are reflected by a steel plate, so that the energy produced thereby is used to entangle and bond the fibers.

It is also possible to use a plurality of porous supports. For example, the plurality of porous supports may be used such that fibers having a three-dimensional shape are entangled using a first porous support, and a nonwoven fabric is shaped into a desired mesh shape using a second porous support. In this case, the second porous support has a pattern shape in accordance with the desired mesh shape.

The obtained nonwoven fabric having a mesh form may further be subjected to thermal bonding, depending on needs, to enhance the strength of the nonwoven fabric.

In order to improve water absorbency of the nonwoven fabric via not only the fiber surfaces but also between fibers, the fibers forming the nonwoven fabric having a mesh form may have a fiber diameter, for example, in a range from about 0.5 to 30.0 $\mu$m, preferably from about 2.0 to 25.0 $\mu$m, and more preferably from about 5.0 to 20.0 $\mu$m. The fiber diameter of the fibers is a value determined in accordance with the method explained for the Examples described later.

The hydrophilic fibers in the breathing-sided sheet are not particularly limited as long as the fibers can retain liquid, and may include natural fibers, regenerated fibers, semisynthetic fibers, and synthetic fibers. The hydrophilic fibers may also be fibers with hydrophilicity imparted thereto by postprocessing. The hydrophilic fibers may be used singly or in combination of two or more species of the hydrophilic fibers. Hydrophilic natural fibers may include, for example, natural cellulose fibers, such as cotton, hemp, wool, and pulp. Hydrophilic regenerated fibers may include, for example, regenerated cellulose fibers, such as rayon, polynosic, and cupra. Hydrophilic semisynthetic fibers may include semisynthetic cellulose fibers, such as acetate and triacetate. Hydrophilic synthetic fibers may include, for example, synthetic fibers formed of a thermoplastic resin having a hydrophilic functional group, such as hydroxyl group, a carboxyl group, and a sulfonic acid group, and/or a hydrophilic bond, such as an amide bond, as a preferable example.

The hydrophilic fibers may preferably be cellulose fibers, such as natural cellulose fibers, regenerated cellulose fibers, and semisynthetic cellulose fibers. Even more preferably, the hydrophilic fibers may be rayon (for example, viscose rayon) fibers among the regenerated cellulose fibers.

Preferably, the hydrophilic fibers may also be a polyamide resin among the synthetic fibers. As preferable specific examples of the polyamide resin may include: aliphatic polyamides, such as polyamide 6, polyamide 66, polyamide 11, polyamide 12, polyamide 610, polyamide 612, polyamide 92, and polyamide 9C (polyamide made of nonanediamine and cyclohexanedicarboxylic acid), and copolymers thereof; and semi-aromatic polyamides synthesized from aromatic dicarboxylic acid and aliphatic diamine, such as polyamide 9T (polyamide made of nonanediamine and terephthalic acid), and copolymers thereof.

In order to ensure sufficient water absorbency, the hydrophilic fibers may be present in the fiber aggregates for forming the nonwoven fabric having a mesh form, in a proportion of, for example, 50 wt% or higher, preferably 60 wt% or higher, and more preferably 70 wt% or higher. The proportion of the hydrophilic fibers does not specifically have an upper limit. Although the fiber aggregates may entirely be made of the hydrophilic fibers, the upper limit may be, for example, 95 wt% or lower, preferably 90 wt% or lower, and more preferably 85 wt%.

In order to improve the strength of the nonwoven fabric without binder agents, the fiber aggregates preferably contain, for example, heat-bondable fibers as other fibers. As long as the heat-bondable fibers have such melt points or thermal deformation temperatures that the fibers can melt at a processing temperature in thermal bonding, the heat-bondable fibers may be, for example, non-composite fibers of a low-melting-point resin having a melting point or a thermal deformation temperature equal to or lower than a processing temperature, or composite fibers including the low-melting-point resin and a high-melting-point resin having a higher melting point than that of the low-melting-point resin.

In case of composite fibers, for example, the composite fibers preferably have a core-sheath structure in which the low-melting-point resin serves as a sheath component and the high-melting-point resin serves as a core component. The low-melting-point resin and the high-melting-point resin may be suitably selected in accordance with a processing temperature in thermal bonding, from polyolefin, such as polyethylene and polypropylene; and polyester, such as polyethylene terephthalate, polybutylene terephthalate, and polylactic acid.

The heat-bondable fibers may have a fineness, for example, in a range from about 1.0 to 3.5 dtex, preferably from about 1.3 to 3 dtex, and more preferably from about 1.5 to 2.5 dtex. In order to align the fibers in the linear portions, the heat-bondable fibers may have a fiber length, for example, in a range from about 30 to 80 mm, and preferably from about 35 to 60 mm.

In order to ensure sufficient water absorbency as well as to ensure strength, the fiber aggregates may include the hydrophilic fibers and the heat-bondable fibers in a weight ratio, for example, in a range from 50/50 to 95/5, preferably from 60/40 to 90/10, and more preferably from 70/30 to 85/15.

Intermediate Ply

An intermediate ply may be provided as necessary. Where an intermediate ply is provided, it can provide various functions in accordance with applications of the mask. For example, in order to enhance dust-proof performance, the mask preferably has a filter sheet as an intermediate ply.

The filter sheet is not particularly limited as long as it is capable of filtering pollens and/or dust, and may include a porous membrane (for example, PTFE (polytetrafluoroethylene) porous membrane) and a nonwoven fabric obtained by the various methods mentioned above. In order to enhance dust-proof performance, the filter sheet is preferably subjected to electrification (or electret treatment). The filter sheet may be electrified by a known or conventional method. Since the breathing-sided sheet of the present invention has high water absorbency, the mask is capable of suppressing decrease in electrostatic propensity of the filter sheet even if there is moisture from breath.

The nonwoven fabric may preferably be a nonwoven fabric obtained by spun-bonding, thermal bonding, spunlacing, or needle punching; a nonwoven fabric (preferably, nanofiber nonwoven fabric) obtained by melt blowing or electrospinning; or a nonwoven fabric (preferably, nanofiber nonwoven fabric) obtained by melting and removing the sea component from a nonwoven fabric made of sea-island fibers. Even more preferably, the nonwoven fabric may be an electrified melt-blown nonwoven fabric or a triboelectrified needle-punched nonwoven fabric.

Fibers forming the filter sheet may suitably selected in accordance with applications of the mask, and may include, for example, polyolefin fibers, such as polyethylene and polypropylene; polyester fibers, such as polyethylene terephthalate, polybutylene terephthalate, and polylactic acid; and acrylic fibers.

Preferably, fibers forming the electrified melt-blown nonwoven fabric may include polypropylene fibers, polylactic acid fibers, and polybutylene terephthalate fibers, and polypropylene fibers are more preferable. Fibers forming the triboelectrified needle-punched nonwoven fabric may include acrylic fibers, polypropylene fibers, and polyethylene terephthalate fibers.

In order to achieve both an enhanced collection efficiency and comfortableness while the mask is worn, the filter sheet may have a pressure loss, for example, in a range from about 0 to 30 Pa, preferably from about 1 to 25 Pa, and more preferably from about 2 to 20Pa. The pressure loss of the filter sheet is a value determined in accordance with the method explained for the Examples described later.

Although the filter sheet preferably has a higher collection efficiency, the filter sheet may have a collection efficiency, for example, 80% or higher (for example, from 80% to 99.99%), preferably 85% or higher, and more preferably 90% or higher, in order to control the pressure loss within an appropriate range. The collection efficiency of the filter sheet is a value determined in accordance with the method explained for the Examples described later.

Surface Sheet

A surface sheet is used as a reinforcing ply or a support ply for the breathing-sided sheet having a mesh shape. The surface sheet can be a known or conventional nonwoven fabric in accordance with applications or configurations.
Preferably, it is possible to use a nonwoven fabric obtained by spun-bonding, melt blowing, thermal bonding, spun-lacing, or chemical bonding.

EXAMPLES

Hereinafter, the present invention will be further described in detail with reference to Examples below, which are not to be construed as limiting the scope of the present invention. In the Example and Comparative Example below, various physical properties were measured by the following methods.

Average Fiber Diameter of Fibers

A nonwoven fiber structure was observed using a scanning electron microscope (SEM). From SEM images, 100 fibers were randomly selected and measured for fiber diameters to calculate a number average fiber diameter. The number average fiber diameter was used as an average fiber diameter of the fibers.

Fineness

In accordance with JIS L 1015 "Testing methods for man-made staple fibers," a fineness was measured for fibers forming a breathing-sided sheet.

Basis Weight

In accordance with section 6.2 of JIS L 1913 "Testing methods for general nonwoven fabrics," a basis weight $(g/m^2)$ was measured for a breathing-sided sheet.

Thickness

In accordance with section 6.1 of JIS L 1913 "Testing methods for general nonwoven fabrics," a thickness was measured for a breathing-sided sheet. Specifically, the breathing-sided sheet was cut at arbitrary 10 points in parallel with a thickness direction and perpendicular to a machine direction (MD direction) of the breathing-sided sheet, using a razor blade ("FEATHER S single edge razor blades" produced by FEATHER Safety Razor Co., Ltd.). Each cross section was observed using a digital microscope to determine a thickness of the cross section. An average of the thicknesses was calculated to determine the thickness (mm) of the sheet.

Average Line Width of Linear Portions

A sheet surface was observed using a digital microscope ("VHX-900 DIGITAL MICROSCOPE" manufactured by KEYENCE CORPORATION). Fiber portions excluding thin portions were defined to be linear portions, and a width of each fiber portion was defined to be a line width of each linear portion. The line widths of the linear portions were measured in each direction of the linear portions, and an average was calculated for randomly-selected ten line widths in each direction to obtain a line width in each direction.

Water Retention Ratio and Water Retention Amount

In accordance with section 6.9.2 of JIS L 1913 "Test methods for general nonwoven fabrics," a water retention ratio was measured for a breathing-sided sheet. Specifically, three test pieces having a size of a 100 mm x 100 mm square were obtained to measure weights (pre-impregnation weights) of the test pieces. Next, the test pieces were impregnated in water for 15 minutes, taken out from water, and hung in the air for one minute with one corner positioned above to drain water from the surface. Then, the test pieces were measured for weights (post-impregnation weights). For each of the three test pieces, a water retention ratio was calculated by the following formula.

$$\text{Water retention ratio (wt\%)} = 100 \times (\text{post-impregnation weight} -$$

$$\text{pre-impregnation weight}) / \text{pre-impregnation weight}$$

An average of the water retention ratios of the test pieces was calculated to be used as a water retention ratio of the breathing-sided sheet. A water retention amount (g) was also calculated as a weight obtained by subtracting the pre-impregnation weight from the post-impregnation weight.

Water Absorption Rate

In accordance with dripping method under section 7.1.1 of JIS L 1907 "Testing methods for water absorbency of textiles," a water absorption rate was measured for a breathing-sided sheet. Specifically, a single water drop of 0.05 g/droplet was dropped using a burette from a height of 10 mm onto an obtained breathing-sided sheet, and time (second) taken for specular reflection to disappear as a result of absorption of the droplet was measured.

Dispersibility and Dispersion Anisotropy

A breathing-sided sheet was cut into a size of 10 cm x 10 cm, and the obtained sheet was placed on a horizontal table. Next, a colored water was prepared by adding 1 g of an ink ("PILOT INK RED (INK-350-R)" produced by PILOT Corporation) to 100 g of ion-exchange water. Then, a single droplet (0.05 g) of the colored water was dropped using a dropper onto the center of the sheet from a height of 1 cm (above) with respect to the rested sheet. Five seconds after dropping the droplet, dispersed distance of the colored water within the sheet surface were determined. That is, a vertical dispersion length (mm) and a transverse dispersion length (mm) were determined on a mask. Also, a value of dispersibility was calculated as a product of the vertical dispersion length (mm) and the transverse dispersion length (mm), i.e., vertical dispersion length (mm) x transverse dispersion length (mm). A larger value of dispersibility indicates that a liquid is dispersed to a larger area. A value of dispersion anisotropy was obtained as a ratio of the longer length/the shorter length of the dispersion lengths in the transverse direction and vertical direction of the mask.

Air Permeability

In accordance with section 8.26 of JIS L 1096 "Testing methods for woven and knitted fabrics," an air permeability $(cm^3/cm^2/s)$ was measured by Frazier Method.

Evaporation Ratio

A breathing-sided sheet was cut into a size of 100 mm x 100 mm. Then, water droplets of 0.10 g were dropped onto the obtained sheet and allowed to stand for 30 minutes to determine a water reduction ratio as a result of evaporation.

Collection Efficiency

Filtration performance of a filter sheet was evaluated using a filtration evaluation apparatus ("AP-6310FP" manufactured by SIBATA SCIENTIFIC TECHNOLOGY LTD). First, a test sample was attached to a measurement cell having a filtering surface with a diameter of 86 mm. In this state, using silica dust having a maximum diameter of 2 $\mu$m or smaller and a number average diameter of 0.5 $\mu$m as test dust, dust-containing air adjusted to have a dust concentration of 30 g $\pm$ 5 mg/m$^3$ was allowed to flow into the measurement cell in which a filter had been set, for one minute at a flow rate of 30 L/min. An upstream dust concentration D1 and a downstream (post-filtration) dust concentration D2 were measured using a light-scattering mass concentration detector, and a collection efficiency was calculated by the following formula.

$$\text{Collection efficiency (\%)} = [(D1 - D2)/D1] \times 100$$

Pressure Loss

A differential pressure (pressure loss (Pa)) was measured at a flow rate of 30 L/min using a micro-differential pressure gauge provided between an upstream side and a downstream side of the measurement cell of the filtration evaluation apparatus.

Sensory Evaluation (Cool Feeling, Sticky Feeling)

A sensory evaluation was made by ten subjects who actually wore a mask for three hours in a room at a temperature of 25°C, a humidity of 60% to determine feeling of use with the following three determination criteria for each feeling. An average was calculated for each feeling.

Cool Feeling

+++ (3 points): with cool feeling
++ (2 points): with slightly cool feeling
+ (1 point): without cool feeling

Sticky Feeling

+++ (3 points): without sticky feeling
++ (2 points): with little sticky feeling
+ (1 point): with clearly sticky feeling

Example 1

(1) Production of Breathing-Sided Sheet

First of all, 80 wt% of rayon fibers ("Hope" produced by Omikenshi Co., Ltd.) having a fineness of 1.7 dtex, an average fiber diameter of 12.0 μm and a fiber length of 40 mm, and 20 wt% of heat-bondable fibers (core/sheath composite fiber having polypropylene core and polyethylene sheath, "HR-NTW," produced by UBE EXSYMO CO., LTD.) having a fineness of 1.7 dtex, an average fiber diameter of 15.3 μm and a fiber length of 51 mm were subjected to carding to obtain a semi-random web.
Next, the thus-obtained semi-random web was placed on a water-penetrable drum support having an aperture ratio of 25% and a hole diameter of 0.3 mm and continuously conveyed in a longitudinal direction at a speed of 5 m/min, while high-pressure water jets were injected from above onto the semi-random web for hydroentanglement process so as to obtain an entangled fiber web (nonwoven fabric). In the entanglement process, two nozzles were used at a distance between the adjacent nozzles of 20 cm, and the nozzles had orifices with a hole diameter of 0.10 mm at intervals of 0.6 mm in a width direction of the web. The high-pressure water curtain injected from the first nozzle had a water pressure of 3.0 MPa, and the high-pressure water curtain injected from the second nozzle had a water pressure of 5.0 MPa (front WJ treatment).
Then, the web was placed on a plain-woven mesh support having a flat shape as a whole with a mesh fiber diameter of 0.90 mm and 10 meshes/inch, in such a way that the front-WJ-treated surface of the nonwoven fabric was in contact with the mesh support, and then continuously conveyed with the web on the mesh support. At the same time, high-pressure water curtains were injected from the opposite surface of the front-WJ-treated surface to perform an entanglement process so as to transfer the roughness of the mesh thereon. The entanglement process was performed using three nozzles having orifices with a hole diameter of 0.10 mm at intervals of 0.6 mm in the width direction of the web, under a condition in which all the high-pressure water curtains had a water pressure of 4.0 MPa (rear WJ treatment).
Next, the rear-WJ-treated nonwoven fabric was dried at 135°C using a cylinder drier so as to produce a breathing-sided sheet used for Example 1.
Table 1 shows various evaluation and measurement results of the breathing-sided sheet.

(2) Production of Mask

The breathing-sided sheet as described in (1) above, an electrified melt-blown nonwoven fabric made of polypropylene fibers as a filter sheet, and a chemically-bonded nonwoven fabric made of rayon fibers as a surface sheet were unwound from each of rolls such that the three plies were continuously overlaid in this order. Then, the plies were subjected to pleat-processing using folded plates in the machine direction, subjected to ultrasonic sealing at upper and lower ends of mask, and cut into a predetermined length on sides of mask. Right and left ends of each mask were then subjected to ultrasonic sealing, and rubber strings were attached by ultrasonic sealing so as to produce a mask of Example 1.

A mask produced thereby was used for the sensory evaluation. Table 1 shows the evaluation result.

Example 2

A mask was produced in the same manner as that of Example 1, except for using a different breathing-sided sheet. The breathing-sided sheet in Example 2 was prepared in the same manner as that of Example 1, except that the basis weight and thickness of the semi-random web for the breathing-sided sheet were changed to the values shown in Table 1. Table 1 shows the evaluation and measurement results.

Example 3

A mask was produced in the same manner as that of Example 1, except for using a different breathing-sided sheet. The breathing-sided sheet in Example 3 was prepared in the same manner as that of Example 1, except for using, as the mesh support employed in the rear WJ treatment, a plain-woven mesh support with a mesh fiber diameter of 0.90 mm and 13 meshes/inch.

Example 4

A mask was produced in the same manner as that of Example 2, except for using a different breathing-sided sheet. The breathing-sided sheet in Example 4 was prepared in the same manner as that of Example 2, except for using, as the mesh support employed in the rear WJ treatment, a plain-woven mesh support with a mesh fiber diameter of 0.90 mm and 13 meshes/inch.

Example 5

A mask was produced in the same manner as that of Example 1, except for using a different breathing-sided sheet. The breathing-sided sheet in Example 5 was prepared in the same manner as that of Example 1, except for using, as the mesh support employed in the rear WJ treatment, a plain-woven mesh support with a mesh fiber diameter of 1.20 mm and 12 meshes/inch.

Example 6

A mask was produced in the same manner as that of Example 2, except for using a different breathing-sided sheet. The breathing-sided sheet in Example 6 was prepared in the same manner as that of Example 2, except for using, as the mesh support employed in the rear WJ treatment, a plain-woven mesh support with a mesh fiber diameter of 1.20 mm and 12 meshes/inch.

Example 7

A mask was produced in the same manner as that of Example 1, except for using a different breathing-sided sheet. The breathing-sided sheet in Example 7 was prepared in the same manner as that of Example 1, except for using, as the mesh support employed in the rear WJ treatment, a plain-woven mesh support with a mesh fiber diameter of 0.65 mm and 25 meshes/inch.

Example 8

A mask was produced in the same manner as that of Example 2, except for using a different breathing-sided sheet. The breathing-sided sheet in Example 8 was prepared in the same manner as that of Example 2, except for using, as the mesh support employed in the rear WJ treatment, a plain-woven mesh support with a mesh fiber diameter of 0.65 mm and 25 meshes/inch.

Example 9

A mask was produced in the same manner as that of Example 1, except for using a different breathing-sided sheet. The breathing-sided sheet in Example 9 was prepared in the same manner as that of Example 1, except for using, as the mesh support employed in the rear WJ treatment, a plain-woven mesh support with a mesh fiber diameter of 0.90 mm and 6 meshes/inch.

Comparative Example 1

A mask was produced in the same manner as that of Example 1, except for using, as a breathing-sided sheet, a thermal-bonded nonwoven polypropylene fabric ("NRIP (HYCOMFORT)" produced by RENGO NONWOVEN PRODUCTS CO., LTD.).

Comparative Example 2

A commercially available gauze mask (cotton 100%, 18-ply gauze mask produced by NISSIN MEDICAL INSTRUMENT CO., LTD.) was used.

Comparative Example 3

A mask was produced in the same manner as that of Example 1, except for using a breathing-sided sheet that was prepared in the same manner as that of Example 1, except for using, as the mesh support employed in the rear WJ treatment, a plain-woven mesh support with a mesh fiber diameter of 0.20 mm and 76 meshes/inch.

[Table 1]

| | | | | Ex. 1 | Ex. 2 | Ex. 3 | Ex. 4 | Ex. 5 | Ex. 6 | Ex. 7 | Ex. 8 | Ex. 9 | Com. Ex. 1 | Com. Ex. 2 | Com. Ex. 3 |
|---|---|---|---|---|---|---|---|---|---|---|---|---|---|---|---|
| Breathing-sided sheet | Basis weight | | $g/m^2$ | 50.6 | 66.9 | 52.1 | 66.4 | 52.2 | 65.5 | 52.8 | 64.1 | 51.1 | 17.5 | 509.1 | 51.3 |
| | Thickness | | mm/ply | 0.44 | 0.53 | 0.44 | 0.52 | 0.44 | 0.53 | 0.45 | 0.54 | 0.41 | 0.20 | 3.73 | 0.40 |
| | Average line width | Vertical | mm | 1.65 | 1.70 | 1.05 | 1.03 | 0.92 | 0.90 | 0.37 | 0.36 | 3.33 | - | - | - |
| | | Transverse | mm | 1.76 | 1.68 | 1.02 | 0.99 | 0.89 | 0.88 | 0.36 | 0.36 | 3.10 | - | - | - |
| | Water retention | Amount | g | 4.4 | 4.8 | 4.4 | 4.8 | 4.5 | 4.9 | 4.5 | 5.0 | 4.4 | 0.8 | 26.8 | 4.3 |
| | | Ratio | % | 870 | 717 | 845 | 723 | 862 | 748 | 852 | 780 | 861 | 457 | 526 | 838 |
| | Water absorption rate | | s | 0.8 | 0.6 | 1.1 | 0.5 | 0.9 | 0.6 | 1.1 | 0.7 | 0.8 | ≥180 | 0.6 | 0.4 |
| | Dispersion length (vertical) | | mm | 20 | 22 | 20 | 22 | 21 | 20 | 20 | 20 | 19 | 14 | 20 | 18 |
| | Dispersion length (transverse) | | mm | 27 | 30 | 26 | 29 | 25 | 27 | 25 | 26 | 21 | 15 | 21 | 19 |
| | Dispersion anisotropy | | - | 1.35 | 1.36 | 1.30 | 1.32 | 1.19 | 1.35 | 1.2 | 1.30 | 1.11 | 1.07 | 1.05 | 1.06 |
| | Dispersibility (vertical x transverse) | | $mm^2$ | 540 | 660 | 520 | 638 | 525 | 540 | 500 | 460 | 380 | 210 | 420 | 342 |
| | Air permeability (differential pressure of 125 Pa) | | $cm^3/cm^2/s$ | 245.0 | 183.0 | 351.0 | 239.0 | 352.0 | 277.0 | 344.0 | 297.0 | 272.0 | 385.0 | 71.5 | 212.0 |
| | Evaporation ratio | | % | 73 | 78 | 70 | 72 | 65 | 67 | 53 | 55 | 45 | 38 | 50 | 42 |
| Intermediate ply | Collection Efficiency | | % | 93.0 | 93.0 | 93.0 | 93.0 | 93.0 | 93.0 | 93.0 | 93.0 | 93.0 | 93.0 | - | 93.0 |
| | Inhalation resistance | | Pa | 5.7 | 5.7 | 5.7 | 5.7 | 5.7 | 5.7 | 5.7 | 5.7 | 5.7 | 5.7 | - | 5.7 |
| Mask | Sensory evaluation | Cool feeling | | 3 | 3 | 3 | 3 | 3 | 3 | 2 | 2 | 2 | 1 | 2 | 1 |
| | | Sticky feeling | | 3 | 3 | 3 | 3 | 3 | 3 | 2 | 2 | 2 | 1 | 1 | 2 |

Since each of Examples 1 to 9 has the nonwoven fabric having a mesh form and including the hydrophilic fibers as the breathing-sided sheet, the masks have been evaluated as not only suppressing stickiness, but also providing cool feeling when the masks are worn. This is presumably because the breathing-sided sheet is capable of absorbing water only in a few seconds, and the absorbed moisture is dispersed to a wide area and quickly evaporated thanks to high air permeability. Furthermore, since the breathing-sided sheet itself has sufficient water retainability, it can also relieve discomfort such as stickiness and clinging caused by sweat.

In contrast, since Comparative Example 1 uses the hydrophobic thermal-bonded nonwoven polypropylene fabric as the breathing-sided sheet, the mask has been evaluated as clearly causing stickiness without cool feeling, despite that the mask includes the same intermediate ply and the surface sheet as those of the mask of the present invention.

Where the gauze mask of Comparative Example 2 is used, since the mask has a high basis weight and a large thickness, the mask has a lower water retention ratio than those of the Examples and a lower value of air permeability than those of the Examples. Possibly for this reason, although the mask has a large water retention amount, the mask has been evaluated as clearly causing stickiness while the mask is worn.

In Comparative Example 3, although the nonwoven fabric made of the same material as that of Example 1 is used for the breathing-sided sheet, the nonwoven fabric does not have a mesh form of the linear portions because the nonwoven fabric is dense and does not have thin portions. Thus, the mask has lower values for both dispersibility and evaporation ratio than those of the Examples. Possibly for this reason, the feeling of use of the mask has been evaluated as causing no cool feeling.

INDUSTRIAL APPLICABILITY

The mask of the present invention may be applied as, for example, a flat mask, besides a pleated mask and a three-dimensional mask as discussed above. Such masks may be applied as, for example, household masks against pollens, common cold and viruses, and PM2.5; medical masks, such as surgical masks; as well as industrial masks, such as dust-proof masks, including N95 masks approved by NIOSH in the U.S. Additionally, the mask of the present invention may also be applied as a therapeutic mask for sleep apnea syndrome.

Although the present invention has been described in connection with the preferred embodiments thereof with reference to the accompanying drawings, those skilled in the art will readily conceive numerous changes and modifications within the framework of obviousness upon the reading of the specification presented herein. Accordingly, such changes and modifications are construed as within the scope of the invention as defined by the scope of the claims.

Reference Numerals

| | |
|---|---|
| 100, 200 | mask |
| 201, 202 | mask piece |
| 110, 210 | covering part |
| 120 | layered sheet |
| 121 | breathing-sided sheet |
| 122 | filter sheet |
| 123 | surface sheet |
| 130 | pleat |
| 140 | wire |
| 150, 250 | fixing part |
| 251 | opening through which an ear is inserted |
| 160 | elastic reinforcing part |
| 260, 261, 262 | connecting part |

**Claims**

1. A mask comprising at least a mouth- and/or nose-covering part for a human, wherein the covering part at least comprises a breathing-sided sheet containing hydrophilic fibers as a human-sided ply, and the breathing-sided sheet is a nonwoven fabric having a mesh form of linear portions.

2. The mask according to claim 1, wherein the linear portions of the breathing-sided sheet have an average line width in a range from 0.1 to 3.0 mm.

3. The mask according to claim 1 or 2, wherein the hydrophilic fibers are cellulose fibers.

4. The mask according to any one of claims 1 to 3, wherein the breathing-sided sheet contains the hydrophilic fibers at a content of 50 wt% or higher and further contains heat-bondable fibers.

5. The mask according to any one of claims 1 to 4, wherein the breathing-sided sheet has a thickness in a range from 0.25 to 1.00 mm.

6. The mask according to any one of claims 1 to 5, wherein the breathing-sided sheet has a value obtained by multiplying the average line width (mm) by the thickness (mm) in a range from 0.025 to 1.8.

7. The mask according to any one of claims 1 to 6, wherein the breathing-sided sheet has a basis weight in a range from 30 to 100 g/m$^2$.

8. The mask according to any one of claims 1 to 7, wherein the covering part further comprises a filter sheet on an outer side of the breathing-sided sheet.

9. The mask according to claim 8, wherein the filter sheet is an electrified melt-blown nonwoven fabric.

10. The mask according to claim 8, wherein the filter sheet is a triboelectrically charged needle-punched nonwoven fabric.

## Fig. 1

## Fig. 2

Fig. 3

Fig. 4

Fig. 5

Fig. 6

## INTERNATIONAL SEARCH REPORT

| International application No. |
|---|
| PCT/JP2018/020040 |

| A. CLASSIFICATION OF SUBJECT MATTER |
|---|
| Int.Cl. A41D13/11(2006.01)i, A62B18/02(2006.01)i |

According to International Patent Classification (IPC) or to both national classification and IPC

| B. FIELDS SEARCHED |
|---|
| Minimum documentation searched (classification system followed by classification symbols) |
| Int.Cl. A41D13/11, A62B18/02 |

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X<br>Y | JP 50-25087 A (ASAHI KASEI KOGYO CO., LTD.) 17 March 1975, page 2, lower right column, line 20 to page 3, lower left column, line 13, page 4, lower right column, line 20 to page 5, upper left column, line 6, fig. 1, 2<br>(Family: none) | 1-3<br>4-10 |
| X<br>Y | JP 2012-29990 A (DAIO PAPER CORPORATION) 16 February 2012, paragraphs [0020], [0021]<br>(Family: none) | 1-3<br>4-10 |

☒ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15.06.2018 | 26.06.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | <br><br>Telephone No. |

Form PCT/ISA/210 (second sheet) (January 2015)

**INTERNATIONAL SEARCH REPORT**

International application No.

PCT/JP2018/020040

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2009-233307 A (SEKISUI PLASTICS) 15 October 2009, paragraphs [0008], [0022] (Family: none) | 4-10 |
| Y | JP 2010-94503 A (JAPAN VILENE CO., LTD.) 30 April 2010, paragraphs [0043]-[0046], [0050] (Family: none) | 5-9 |
| Y | JP 2011-235219 A (JAPAN VILENE CO., LTD.) 24 November 2011, paragraphs [0086], [0170] & US 2013/0047856 A1, paragraphs [0092], [0189] & WO 2011/138951 A1 & EP 2567744 A1 & CN 102883789 A & KR 10-2013-0086939 A | 8, 10 |
| A | JP 2000-334872 A (NIPPON PETROCHEMICALS CO., LTD.) 05 December 2000 (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017109843 A
- JP 2004357871 A
- JP 2006325688 A